Europäisches Patentamt

European Patent Office

Office européen des brevets

(11) Veröffentlichungsnummer: **0 415 249 A2**

## EUROPÄISCHE PATENTANMELDUNG

(21) Anmeldenummer: 90116035.8

(22) Anmeldetag: 22.08.90

(51) Int. Cl.5: **H04N 5/44**

(30) Priorität: 31.08.89 DE 3928892

(43) Veröffentlichungstag der Anmeldung:
06.03.91 Patentblatt 91/10

(84) Benannte Vertragsstaaten:
AT BE CH DE DK ES FR GB GR IT LI LU NL SE

(71) Anmelder: DEUTSCHE THOMSON-BRANDT GMBH

W-7730 Villingen-Schwenningen(DE)

(72) Erfinder: Geiger, Erich, Dipl.-Ing.
Panoramaweg 19
W-7731 Unterkirnach(DE)

(74) Vertreter: Einsel, Robert, Dipl.-Ing.
Deutsche Thomson-Brandt GmbH Patent-
und Lizenzabteilung Göttinger Chaussee 76
W-3000 Hannover 91(DE)

(54) **Wiedergabeverbesserung eines Bildsignals.**

(57)
2.1 Bildwiedergabegeräte, insbesondere solche, die mit einer Vertikalfrequenz von 50 Hz oder weniger arbeiten, können bei der Wiedergabe von hellem Bildinhalt ein Großflächenflimmern erzeugen.

2.2 In Bildwiedergabegeräten mit einer für hohe Auflösung bemessenen Zeilenzahl wird die Amplitude des Luminanzsignals (Y) gemessen und diese Amplitude und/oder ein Meßergebnis über die Dauer eines Bildes oder eines Teiles davon gemittelt. Die einen Schwellwert für die Amplitude des Luminanzsignals (Y), das Meßergebnis und/oder das Mittelwertsergebnis übersteigenden Größen werden einer Einrichtung zur Erhöhung der Vertikalablenkfreguenz für das jeweils zeitlich folgende Bild oder den jeweils zeitlich folgenden Bildteil zugeführt. Dabei wird zwischen einer progressiven Wiedergabe bei niedriger Helligkeit und einer Interlace-Wiedergabe mit verdoppelter Vertikalfreguenz bei erhöhter Helligkeit umgeschaltet. Die Zeilenfreguenz bleibt dabei unverändert. Ein Signal für die Steuerung der Betriebsart kann z.B. von einem Fernsehsender übertragen werden. Das Großflächenflimmern in Bildern mit erhöhter Helligkeit wird beseitigt und die hohe vertikale Auflösung in Bildern mit geringerer Helligkeit bleibt erhalten.

2.3 Für Fernsehgeräte ohne Großflächenflimmern.

## WIEDERGABEVERBESSERUNG EINES BILDSIGNALS

Die Erfindung betrifft ein Verfahren sowie eine Schaltung zur Wiedergabeverbesserung eines Bildsignals.

Stand der Technik

Aus Funkschau 1987, Heft 11, Seite 99 ff, sind verschiedene Wiedergabeverbesserungs-Verfahren für Fernsehsignale mit Zeilensprung angegeben, insbesondere Verfahren, die das Großflächenflimmern beseitigen sollen. Die dort beschriebenen Flimmerreduktionsverfahren weisen eine 100 Hz-Teilbildfreguenz unter Beibehaltung des Zwischenzeilenverfahrens auf. Bei einem dort beschriebenen Flimmerreduktionsverfahren V1 werden die zu einem Vollbild gehörenden Teilbilder A1 und A2 wiederholt wiedergegeben. Dadurch wird das Kantenflackern auf 50 Hz erhöht und ist darum mit dem Auge nicht mehr wahrnehmbar. Auch wirken das Zeilenflimmern und das Zeilenwandern nicht mehr störend. Probleme treten prinzipbedingt bei der Wiedergabe von bewegten Bildinhalten auf. Durch die Wiederholung der Teilbilder A1 und A2 kommt es zu einer Verwürfelung der Bildphasen, so daß sich dieses Verfahren für bewegte Details nicht eignet.

Bei einem weiteren Verfahren V2 wird diese Bewegungsverwürfelung vermieden, indem die einzelnen Teilbilder wiederholt wiedergegeben werden. Diese Wiedergabe hat jedoch den Nachteil, daß wieder ein 25 Hz-Kantenflackern auftreten kann.

Zur Vermeidung von Großflächenflimmern sowie Kantenflackern kann ein Bewegungsdetektor eingesetzt werden.

Bei einem dritten Verfahren V3 werden die horizontalen Kanten im zweiten und dritten Teilbild verschliffen. Eine Kombination der Verfahren V1 mit V3 ergibt eine gute Bildgualität bei stationären und bewegten Bildern. Es ist jedoch ein besonders präziser Bewegungsdetektor erforderlich.

Ein weiteres Verfahren V4 arbeitet mit vertikaler und mit zeitlicher Interpolation. Ein Kantenflackern tritt hierbei nicht auf und eine Bewegungsverwürfelung wird vermieden. Bei schnellen Bewegungen kommt es jedoch zunehmend zu unscharfen Abbildungen bewegter Details.

Erfindung

Der Erfindung liegt die Aufgabe zugrunde, ein vereinfachtes Wiedergabeverbesserungs-Verfahren anzugeben, bei dem die wahrnehmbare Auflösung erhalten bleibt.

Diese Aufgabe wird durch die im Patentanspruch 1 angegebenen Maßnahmen gelöst. Vorteilhafte Weiterbildungen der Erfindung sind in den Unteransprüchen beschrieben.

In Bildwiedergabegeräten mit einer für hohe Auflösung bemessenen Zeilenzahl wird die Amplitude des Luminanzsignals Y gemessen und diese Amplitude und/oder ein Meßergebnis über die Dauer eines Bildes oder eines Teiles davon gemittelt. Die einen Schwellwert für das Luminanzsignal Y, das Meßergebnis und/oder das Mittelwertsergebnis übersteigenden Größen werden einer Einrichtung zur Erhöhung der Vertikalablenkfreguenz für das jeweils zeitlich folgende Bild oder den jeweils zeitlich folgenden Bildteil zugeführt.

Im Fall geringer Helligkeit kann das Bildsignal z.B. in Form von Vollbildern (progressive) mit einer Bildwiederholfreguenz von 50 Hz und im Fall höherer Helligkeit in Form von Halbbildern (interlaced) mit verdoppelter Bildwiederholfrequenz von 100 Hz dargestellt werden. Vorteilhaft bleibt die Zeilenfreguenz dabei unverändert.

Ein Signal für die Steuerung der Betriebsart kann z.B. auch in einem Fernsehstudio ermittelt und innerhalb des Videosignals (in der vertikalen Austastlücke) übertragen werden.

Bildsignale für die progressive Wiedergabe oder die Wiedergabe mit Halbbildern und verdoppelter Bildwiederholfreguenz können jeweils mit bekannten Verfahren erzeugt werden (s. 'Stand der Technik').

Bei geringer Helligkeit, wo mit einer Bildröhre eine höhere Auflösung dargestellt werden kann (weil kein Überstrahlen auftritt), wird dann durch die progressive Darstellung eine höhere vertikale Auflösung wiedergeben. Bei höherer Helligkeit, wo die Bildröhre überstrahlt und Großflächenflimmern störend wird, wird vorteilhaft auf die erhöhte Bildwiederholfreguenz umgeschaltet. Der Auflösungsverlust wird dabei durch das Überstrahlen der Bildröhre kaum sichtbar, aber das störende Großflächenflimmern wird deutlich verringert.

Zeichnungen

Nachstehend wird ein Ausführungsbeispiel anhand der Zeichnungen erläutert:

Fig. 1 eine erfindungsgemäße Schaltung zur Erzeugung einer Schaltspannung für eine Ablenkschaltung in Abhängigkeit von der Helligkeit der Luminanzsignale,

Fig. 2 ein zugehöriges Zeitdiagramm.

Ausführungsbeispiele

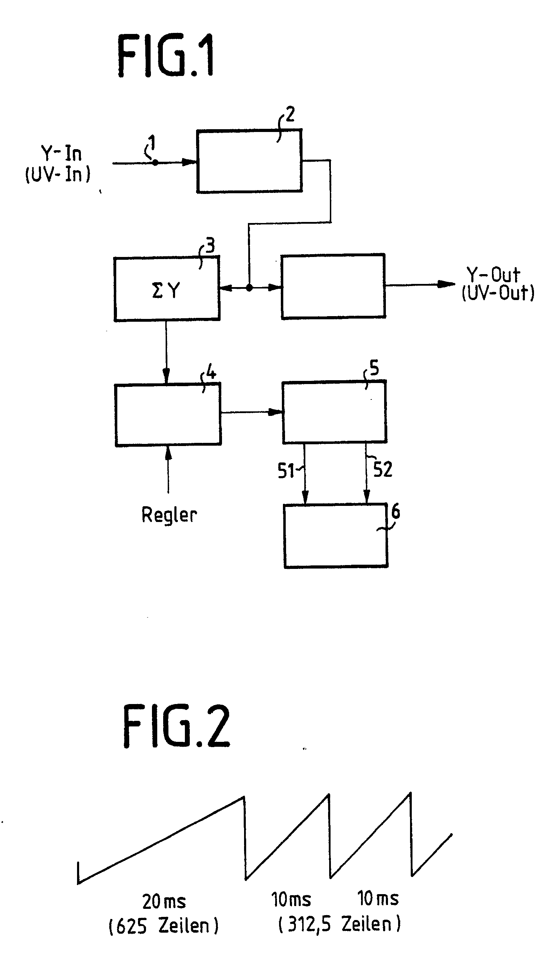

Fig. 1 gibt eine Schaltung wieder, deren Eingang (Y-in) Videosignale, deren Vollbilder aus jeweils zwei Halbbildern zusammengesetzt sind, zugeführt werden. Jedes Halbbild umfaßt eine Zeitdauer von 20 ms. Die ankommenden Signale werden bildpunktweise einem Bildspeicher 2 und anschließend einem Mittelwertbilder 3 zugeführt. Der Mittelwertbilder 3 ist vorzugsweise ein 8 + 8 Bit-Addierer, bei dem die Mittelwertbildung dadurch geschieht, daß vom 9 Bit-Additionsergebnis nur die acht höherwertigen Bit am Ausgang des Mittelwertbilders 3 abgegriffen werden. Das Ergebnis des Mittelwertbilders 3 wird bildpunktweise einer Schwellwerteinrichtung 4 zugeführt. Der Schwellwert kann fest oder einstellbar sein. Das Ausgangssignal der Schwellwerteinrichtung wird einem Umschaltsignal-Generator 5 zugeführt, an dessen erstem Ausgang 51 während der Wiedergabezeit eines Bildes oder eines Bildteils mit einem geringen Mittelwert der Helligkeit ein Signal für eine Ablenkschaltung 6 mit 20 ms-Vollbildern abgreifbar ist. Wenn die mittlere Helligkeit über dem Schwellwert liegt, ist am zweiten Ausgang 52 ein Signal verfügbar, das die Ablenkschaltung 6 auf Halbbilder mit jeweils 10 ms Zeitdauer umschaltet.

In einem dem Bildspeicher nachgeschalteten Upkonverter wird das Luminanz-Ausgangssignal (Y-Out) wahlweise mit 50 Hz/1:1 oder mit 100 Hz/2:1 erzeugt.
Entsprechend werden auch die Chrominanzsignale (UV-In) in einem Bildspeicher zwischengespeichert und in einem Upkonverter passend zu den Luminanzsignalen (Y-Out) zu Chrominanzsignalen (UV-Out) umgeformt. Für die Bildung des Umschaltsignals in Umschaltsignal-Generator 5 mit Hilfe des Mittel werts und des Schwellwerts wird vorzugsweise nur das Luminanzsignal ausgewertet.

Die Information, ob der Schwellwert über-oder unterschritten wird, kann auch über eine Messung des Betrages des Strahlstromes der Bildröhre erzeugt werden.

Anhand der in Fig. 2 dargestellten Zeitabläufe wird die Wirkungsweise der Schaltung gemäß Fig. 1 gezeigt. In der linken Bildhälfte ist ein Rampensignal in der Ablenkschaltung 6 für 20 ms-Vollbilder dargestellt und in der rechten Bildhälfte ein entsprechendes Rampensignal für 10 ms-Halbbilder.

## Ansprüche

1. Verfahren zur Wiedergabeverbesserung eines Fernsehbildes, insbesondere zur Verringerung des Großflächenflimmerns bei Fernsehgeräten mit einer für hohe Auflösung bemessenen Zeilenzahl, **dadurch gekennzeichnet**, daß die Amplitude des Helligkeitssignals (Y) gemessen wird, daß diese Amplituden und/oder das Meßergebnis über die Dauer eines Bildes oder eines Teiles davon gemittelt werden, und daß die einen Schwellwert für die Helligkeitssignale (Y), das Meßergebnis und/oder das Mittelwertsergebnis übersteigenden Größen einer Einrichtung zur Erhöhung der Vertikalablenkfrequenz für das jeweils zeitlich folgende Bild oder den jeweils zeitlich folgenden Bildteil zugeführt werden.

2. Verfahren nach Anspruch 1, **dadurch gekennzeichnet**, daß die Vertikalablenkfrequenz verdoppelt wird.

3. Verfahren nach Anspruch 2, **dadurch gekennzeichnet**, daß das Fernsehbild progressiv mit einfacher Vertikalablenkfrequenz dargestellt wird, wenn der Schwellwert unterschritten wird, und daß das Fernsehbild im Zwischenzeilenverfahren mit doppelter Vertikalablenkfrequenz dargestellt wird, wenn der Schwellwert überschritten wird, wobei die Zeilenfrequenz in beiden Fällen im wesentlichen gleich ist.

4. Verfahren nach Anspruch 3, **dadurch gekennzeichnet**, daß das Fernsehbild mit 50 Hz/1:1 bzw. 59,94 Hz/1:1 bzw. 60 Hz/1:1 dargestellt wird, wenn der Schwellwert unterschritten wird, und daß das Fernsehbild mit 100 Hz/2:1 bzw. 119,88 Hz/2:1 bzw. 120 Hz/2:1 dargestellt wird, wenn der Schwellwert überschritten wird.

5. Verfahren nach einem oder mehreren der Ansprüche 1 bis 4, **dadurch gekennzeichnet**, daß bei einem nach dem Zeilensprungverfahren aus zwei nacheinander abgetasteten Halbbildern mit je 625 Zeilen wiedergegebenen Bild von insgesamt 1250 Zeilen bei einer über dem Schwellwert liegenden Helligkeit jedes Halbbild aus zwei Teilbildern mit je 312,5 Zeilen zusammengesetzt wird.

6. Verfahren nach einem der Ansprüche 3 bis 5, **dadurch gekennzeichnet**, daß die Bildung der wiederzugebenden Bilder bewegungsadaptiv geschieht.

7. Verfahren nach einem oder mehreren der Ansprüche 1 bis 6, **dadurch gekennzeichnet**, daß der Schwellwert bei 6080% der maximal erreichbaren Helligkeits-Amplitude bzw. des maximal erreichbaren Meß- oder Mittelwertsergebnisses liegt.

8. Verfahren nach einem oder mehreren der Ansprüche 1 bis 7, **dadurch gekennzeichnet**, daß der Schwellwert, die Information, ob der Schwellwert über- oder unterschritten wird und/oder eine Information über Bewegung im Bild dem Fernsehsignal vor einer Ubertragung oder Speicherung hinzugefügt wird.

9. Verfahren nach einem oder mehreren der Ansprüche 1 bis 8, **dadurch gekennzeichnet**, daß die Information, ob der Schwellwert über- oder unterschritten wird, in Abhängigkeit vom Betrag des Strahlstromes einer Bildröhre erzeugt wird.

10. Verfahren nach einem oder mehreren der Ansprüche 1 bis 9, **dadurch gekennzeichnet**, daß Mittel vorgesehen sind, die für jede Vertikalablenkfreguenz eine optimale Tangensentzerrung des Hinlaufs bewirken.

# FIG.1

Y-In
(UV-In)

ΣY

Y-Out
(UV-Out)

Regler

51

52

# FIG.2

20ms
(625 Zeilen)

10ms
(312,5 Zeilen)

10ms